**Europäisches Patentamt**

**European Patent Office**

**Office européen des brevets**

(19)

(11) Numéro de publication : **0 442 234 B1**

(12) **FASCICULE DE BREVET EUROPEEN**

(45) Date de publication du fascicule du brevet :
29.09.93 Bulletin 93/39

(51) Int. Cl.$^5$ : **B60S 1/38**

(21) Numéro de dépôt : **90403677.9**

(22) Date de dépôt : **19.12.90**

(54) **Balai d'essuie-vitre à grande souplesse, en particulier pour des vitres fortement galbées de véhicule automobile.**

(30) Priorité : **15.02.90 FR 9001839**

(43) Date de publication de la demande :
**21.08.91 Bulletin 91/34**

(45) Mention de la délivrance du brevet :
**29.09.93 Bulletin 93/39**

(84) Etats contractants désignés :
**DE GB IT**

(56) Documents cités :
**GB-A- 2 211 078**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Lukaszewski, André**
**32 Rue des Avets**
**F-25700 Mathay (FR)**

(74) Mandataire : **Bouget, Lucien et al**
**Cabinet Lavoix 2, Place d'Estienne d'Orves**
**F-75441 Paris Cédex 09 (FR)**

EP 0 442 234 B1

Jouve, 18, rue Saint-Denis, 75001 PARIS

## Description

L'invention concerne un balai d'essuie-glace à grande souplesse, en particulier pour des vitres fortement galbées de véhicule automobile.

Les véhicules automobiles comportent, associés à leur pare-brise et éventuellement à leur lunette arrière, des dispositifs essuie-glace constitués d'un ou de deux balais fixés sur un dispositif d'entraînement en rotation alternatif.

Le balai ou raclette comporte une lame souple d'essuyage généralement en caoutchouc ayant un bord sur lequel est sertie une baguette métallique souple et un ensemble de support de la lame relié au dispositif d'entraînement en rotation de la raclette.

L'ensemble de support comporte généralement un palonnier principal muni de moyens de raccordement à un porte-raclette par l'intermédiaire duquel le balai peut être entraîné et des palonniers fixés directement ou indirectement sur le palonnier principal, de manière articulée.

Dans certains cas, comme décrit dans le GB-A-2.111.078, le palonnier principal porte, de manière articulée, à l'extrémité de chacune de ses branches, un palonnier intermédiaire et chacun des palonniers intermédiaires porte lui-même, de manière articulée, un palonnier secondaire à l'extrémité de chacune de ses branches.

Dans ce cas, la lame souple d'essuyage est portée par les palonniers secondaires.

Le palonnier principal est un palonnier porteur par l'intermédiaire duquel est transmise la force d'appui du balai d'essuie-glace sur la vitre. Les balais intermédiaires sont à la fois des balais portés et des balais porteurs sur lesquels sont fixés les balais secondaires.

Dans le cas de vitres pour véhicule automobile tels que des pare-brise ou des lunettes arrière fortement galbés, il est nécessaire d'utiliser des balais d'essuie-glace de grande souplesse susceptibles d'épouser la forme de la vitre, quelle que soit la position du balai d'essuie-glace par rapport à la surface galbée, sous l'effet de la force d'appui transmise par le porte-raclette.

L'utilisation d'une lame d'essuyage de grande souplesse et la fixation articulée des palonniers portés sur les palonniers porteurs permettent généralement d'éviter un décollement de la lame souple par rapport à la vitre qui se traduirait par un essuyage défectueux.

Cependant, dans le cas de vitres fortement galbées, la partie d'extrémité externe de la lame d'essuyage du balai peut se trouver soulevée par rapport à la surface de la vitre, dans certaines positions du balai, en cours d'utilisation.

De plus, les dispositifs d'essuyage des vitres de véhicule automobile peuvent être équipés d'un système de mise à l'arrêt appelé système arrêt-parking permettant de protéger le balai d'essuie-glace et d'en interdire le démontage, lorsque les raclettes sont en position de repos et en particulier, lorsque le véhicule est en stationnement. Le principe de fonctionnement d'un système arrêt-parking est le suivant : par augmentation de l'angle de balayage des raclettes, le système de mise à l'arrêt-parking du dispositif essuie-glace permet aux raclettes de venir se placer sous le capot moteur. Ce déplacement dans la position d'arrêt-parking peut s'accompagner d'un relâchement de la force d'appui des raclettes sur la vitre, grâce à des rampes ou à des butées assurant un certain soulèvement de la raclette ou un relâchement de la force d'appui exercée par le porte-raclette.

L'extrémité extérieure de la raclette se trouve alors soulevée par rapport à la surface de la vitre, de telle sorte que, lors du retour de la raclette dans sa position active, la mise en contact de la partie d'extrémité de la raclette avec la vitre ne peut pas être réalisée de manière très sûre.

Le but de l'invention est donc de proposer un balai d'essuie-glace comportant une lame souple d'essuyage et un ensemble de support de la lame comprenant un palonnier principal muni de moyens de raccordement à un porte-raclette et ayant deux branches portant chacune, de manière articulée, un palonnier intermédiaire, chaque palonnier intermédiaire porté par le palonnier principal porteur portant lui-même, de manière articulée, un palonnier secondaire sur chacune de ses branches et la lame souple étant portée par les palonniers secondaires, ce balai d'essuie-glace étant d'une très grande efficacité, même dans le cas de vitres fortement galbées et de dispositifs essuie-glace comportant un système d'arrêt-parking, tout en étant d'une forme de réalisation simple permettant une fabrication selon des méthodes connues, dans le cas des balais d'essuie-glace selon l'art antérieur.

Dans ce but, l'un au moins des palonniers constitué par un palonnier porté secondaire ou intermédiaire comporte une branche constituée de deux tronçons reliés entre eux par une articulation supplémentaire, située en vis-à-vis d'une branche du palonnier porteur constitué par un des palonniers intermédiaires ou par le palonnier principal correspondant, sur laquelle est articulé le palonnier porté, l'un des tronçons sur lequel est placé le moyen de fixation du palonnier porté sur le palonnier porteur étant rappelé par un moyen élastique en direction de la branche du palonnier porteur sur laquelle est fixé le palonnier porté.

Différents modes de réalisation sont indiqués dans les revendications dépendantes 2 à 7.

Afin de bien faire comprendre l'invention, on va maintenant décrire, à titre d'exemple non limitatif, en se référant aux figures jointes en annexe, plusieurs modes de réalisation d'un balai d'essuie-glace pour véhicule automobile suivant l'invention.

La figure 1 est une vue schématique d'un balai d'essuie-glace suivant l'art antérieur en appui sur la surface d'un pare-brise de véhicule automobile.

La figure 2 est une vue analogue à la figure 1, dans le cas d'un balai d'essuie-glace suivant l'invention.

La figure 3 est une vue plus détaillée et à plus grande échelle de la partie d'extrémité extérieure du balai d'essuie-glace suivant l'invention représenté sur la figure 2.

La figure 3A est une vue en coupe suivant A-A de la figure 3.

La figure 4 est une vue analogue à la figure 3, dans le cas d'un balai d'essuie-glace suivant l'invention et suivant une variante de réalisation.

La figure 5 est une vue de dessus suivant 5 de la figure 4.

La figure 6 est une vue de côté d'un palonnier secondaire d'un essuie-glace suivant l'invention dont la branche comporte deux tronçons à l'état non assemblé.

La figure 7 est une vue de dessus suivant 7 de la figure 6.

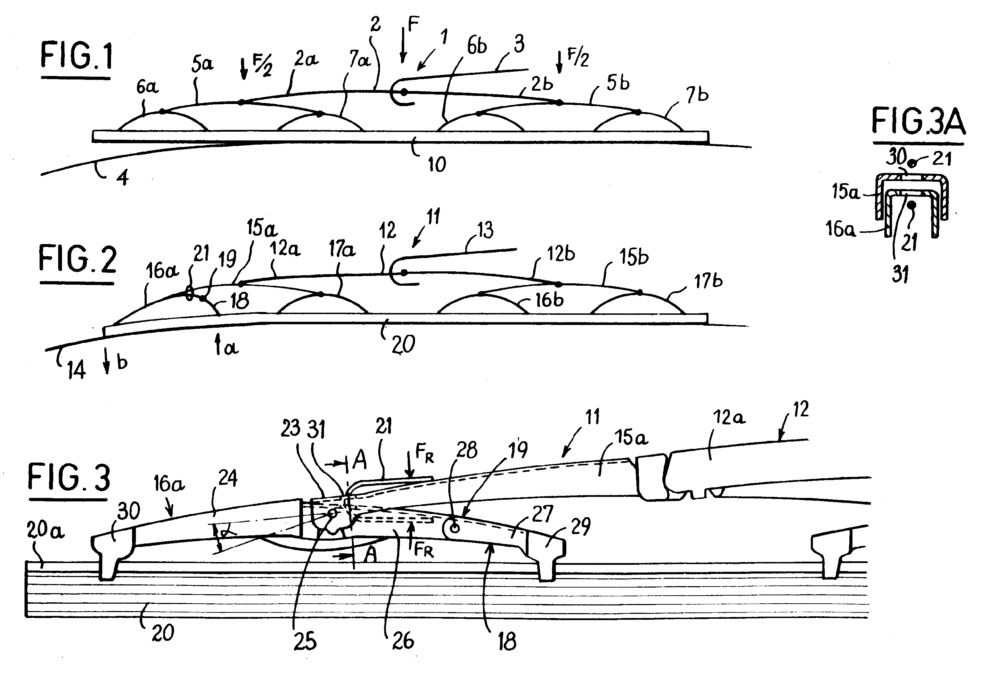

Sur la figure 1, on voit un balai d'essuie-glace suivant l'art antérieur désigné de manière générale par le repère 1.

Ce balai d'essuie-glace comporte un palonnier principal 2 relié, à sa partie centrale, à un porte-raclette 3 assurant l'entraînement du balai 1 en déplacement sur la surface de la vitre 4 constituée par un pare-brise galbé.

A l'extrémité de chacune des branches 2a, 2b du palonnier principal 2 est fixé, de manière articulée, un palonnier intermédiaire, respectivement 5a (branche 2a) et 5b (branche 2b).

Les palonniers intermédiaires 5a et 5b portent, de manière articulée, à l'extrémité de chacune de leurs branches, un palonnier secondaire 6a, 7a pour le palonnier intermédiaire 5a et 6b, 7b pour le palonnier intermédiaire 5b.

Une force d'appui F sensiblement perpendiculaire à la surface 4 du pare-brise est appliquée par l'intermédiaire du porte-raclette 3 sur le palonnier principal 2.

Cette force d'appui F se traduit par deux forces d'appui F/2 sur les palonniers intermédiaires 5a et 5b, à l'extrémité des branches 2a et 2b du palonnier principal.

Les forces d'appui F/2 se répartissent entre chacun des deux palonniers secondaires tels que 6a et 7a ou 6b et 7b.

Une lame souple 10, généralement constituée par une bande de caoutchouc suivant un bord de laquelle est sertie une baguette métallique souple est fixée sur les palonniers secondaires 6a, 7a, 6b et 7b constituant les extrémités de fixation de l'ensemble de support comportant le palonnier principal, les palonniers intermédiaires et les palonniers secondaires.

Malgré la force d'appui F/2 sur le palonnier intermédiaire 5a, dans le cas d'un pare-brise galbé comme représenté sur la figure 1, la partie d'extrémité extérieure de la lame 10 est susceptible de ne pas venir en contact avec la surface du pare-brise. L'essuyage de la vitre risque alors d'être défectueux, dans ses parties galbées situées vers l'extérieur.

De même, si la force d'appui exercée par le porte-raclette sur le palonnier principal est relâchée grâce à un système d'arrêt-parking, l'extrémité extérieure de la raclette risque de se soulever au-dessus de la surface du pare-brise.

Sur la figure 2, on a représenté de manière schématique l'ensemble d'un balai d'essuie-glace suivant l'invention permettant de remédier aux inconvénients des balais d'essuie-glace suivant l'art antérieur tels que représentés sur la figure 1.

La structure générale du balai d'essuie-glace représenté sur la figure 2 est analogue à la structure générale du balai d'essuie-glace selon l'art antérieur représenté sur la figure 1.

Le balai d'essuie-glace désigné de manière générale par le repère 11 comporte un palonnier principal 12 relié à un porte-raclette 13 permettant d'assurer son déplacement sur la surface d'une vitre constituée par un pare-brise galbé 14. Le palonnier principal 12 porte, de manière articulée, à l'extrémité de chacune de ses branches 12a, 12b, un palonnier intermédiaire 15a, 15b. Chacun des palonniers intermédiaires 15a et 15b porte, également de manière articulée, à l'extrémité de chacune de ses branches, un palonnier secondaire, les palonniers secondaires 16a et 17a étant fixés à l'extrémité des branches du palonnier intermédiaire 15a et les palonniers secondaires 16b et 17b à l'extrémité des branches du palonnier intermédiaire 15b.

Une lame souple 20 constituée par une lame de caoutchouc sur laquelle est sertie une baguette métallique suivant l'un de ses bords est fixée à l'extrémité des branches des palonniers secondaires 16a, 17a, 16b, 17b.

Selon l'invention, l'un des palonniers secondaires présente une branche 18 comportant une articulation complémentaire 19, la branche 18 étant située à l'aplomb de la branche du palonnier intermédiaire 15a à l'extrémité de laquelle le palonnier secondaire 16a est fixé de manière articulée.

Le palonnier secondaire 16a dont la branche 18 est réalisée de manière articulée se trouve placé à l'extrémité extérieure du balai d'essuie-glace qui doit venir en contact avec la partie la plus galbée du pare-brise 14.

La branche 18 du palonnier 16a comporte deux tronçons, de part et d'autre de l'articulation 19, l'un de ces tronçons étant solidaire de la seconde branche du palonnier et étant fixé de manière articulée à l'extrémité du palonnier intermédiaire 15a. Ce tronçon de la branche 18 est rappelé par un moyen élastique 21 en direction de la branche du palonnier intermédiaire 15a portant le palonnier secondaire 16a.

Sur la figure 3, on a représenté, de manière plus détaillée et à plus grande échelle, la partie d'extrémité du balai d'essuie-glace 11 selon l'invention représenté dans son ensemble sur la figure 2. Les éléments correspondants sur les figures 2 et 3 portent les mêmes repères.

Le palonnier secondaire 16a est fixé à l'extrémité de la branche du palonnier intermédiaire 15a dirigée vers l'extérieur, cette extrémité de la branche du palonnier intermédiaire 15a étant constituée par une ferrure 23 ayant la forme d'une chape dans laquelle est engagée la partie médiane du palonnier secondaire 16a disposé entre sa branche articulée 18 et une branche rigide 24 dirigée vers l'extérieur.

Le palonnier secondaire 16a engagé dans la ferrure 23 est fixé de manière articulée sur cette ferrure par l'intermédiaire d'un axe d'articulation 25.

La branche 18 du palonnier secondaire 16a comporte un premier tronçon 26 rigidement solidaire de la branche 24 du palonnier au niveau de la partie médiane d'articulation 25 du palonnier et un second tronçon 27 articulé, par l'intermédiaire d'un axe 28, sur la seconde extrémité du tronçon 26 opposée à l'articulation 25.

Le second tronçon 27 de la branche 18 porte à son extrémité une pince 29 permettant la fixation de la lame souple 20 en caoutchouc, par l'intermédiaire de l'un de ses bords le long duquel est fixée une baguette métallique souple 20a.

De la même façon, l'extrémité extérieure de la seconde branche 24 du palonnier 16a porte une pince 30 au niveau de laquelle la lame souple 20 est fixée sur la branche 24 par l'intermédiaire de la baguette métallique 20a sertie le long d'un bord de la lame de caoutchouc 20.

La branche 18 du palonnier 16a comportant deux tronçons articulés 26 et 27 est disposée à l'aplomb de la branche du palonnier intermédiaire 15a à l'extrémité de laquelle le palonnier secondaire 16a est fixé par l'intermédiaire de l'articulation 25.

Le moyen de rappel 21 du tronçon 26 de la branche articulée 18, en direction du palonnier intermédiaire 15a portant le palonnier secondaire 16a est cons titué par un ressort en forme d'épingle comportant deux branches engagées dans deux ouvertures 30 et 31 traversant respectivement la paroi du palonnier intermédiaire 15a et la paroi du palonnier secondaire 16a, comme il est visible sur les figures 3 et 3A.

L'une des branches du ressort 21 en forme d'épingle est en appui sur la surface extérieure de la paroi du palonnier intermédiaire 15a et l'autre branche du ressort 21 est en appui sur la surface intérieure du palonnier secondaire 16a. De cette façon, le tronçon 26 du palonnier 16a solidaire de la branche 24 est rappelé en direction de la branche du palonnier intermédiaire 15a sur laquelle est articulé le palonnier secondaire 16a.

Sur la figure 3, on a représenté l'effort FR s'exerçant sous l'effet du ressort 21 entre le palonnier intermédiaire 15a et le tronçon 26 de la branche 18 du palonnier secondaire 16a.

Cet effort FR exercé par le ressort 21 et la présence de l'articulation 19, 28 permet d'accroître le débattement en pivotement du palonnier secondaire 16a lorsque la partie d'extrémité extérieure du balai d'essuie-glace se trouve placée à l'aplomb d'une partie galbée du pare-brise, comme représenté sur la figure 2.

En effet, le palonnier intermédiaire 15a exerçant une force d'appui sur le palonnier secondaire en direction de la surface de la vitre, dans le cas où la partie d'extrémité extérieure de la lame souple 20 se trouve à l'aplomb d'une partie galbée du pare-brise, le tronçon 26 et la branche 24 du palonnier secondaire 16a sont susceptibles de tourner d'un angle a grâce à la présence de l'articulation 19, 28 et du ressort 21.

Cette rotation d'une partie du palonnier secondaire 16a permet de déplacer la pince 30 par l'intermédiaire de la partie correspondante de la lame souple 20 jusqu'à la mettre en contact avec la partie galbée du pare-brise, à l'extrémité extérieure du balai 11.

Comme représenté par les flèches a et b sur la figure 2, l'extrémité du palonnier 16a portant la pince 29 et la partie correspondante de la bande souple 20 sont susceptibles de se déplacer en s'éloignant de la surface du pare-brise 14 alors que l'extrémité du palonnier 16a portant la pince 30 et la partie correspondante de la bande souple 20 sont susceptibles de se déplacer dans la direction du pare-brise 14, jusqu'à venir en appui sur sa surface externe, de manière à accommoder la forme de la partie galbée, lorsque le balai d'essuie-glace ou raclette est au repos, extrémité extérieure face à une zone galbée du pare-brise.

La mise en appui de la bande souple 20 du balai d'essuie-glace suivant toute sa longueur est alors assurée par l'effort F/2 exercé par le palonnier intermédiaire 15a et par l'effort FR du ressort 21, grâce à la présence de l'articulation 19, 28.

Lorsque le balai d'essuie-glace, au cours de son fonctionnement, se déplace sur une surface, depuis une zone fortement galbée jusqu'à une zone où le galbe de la surface de la vitre est sensiblement plus faible, le balai d'essuie-glace doit suivre ces modifications de surface.

Si l'on désigne par $F_{PL}$ l'effort produit par la rigidité et la flèche imposée à la baguette métallique 20a constituant le porte-lame du balai essuie-glace supportant la lame souple 20, il est nécessaire de réaliser le balai d'essuie-glace et le porte-raclette, de manière que le palonnier secondaire externe et la lame souple puissent accommoder le galbe de la vitre et reprendre leur forme d'origine, tout en réalisant constamment un contact suffisant avec la surface de la vitre pour assurer un essuyage efficace.

Ces conditions sont réalisées dans le cas où sont respectées les inégalités suivantes :

$$F/2 > FR > F_{PL}.$$

Dans ce cas en effet, la force d'appui du palonnier intermédiaire peut assurer la mise en place sur une partie plane de la raclette à l'encontre du ressort 21 et le ressort 21 est susceptible de provoquer le basculement d'angle α du palonnier 16a de manière à mettre en appui la lame souple contre la partie galbée du pare-brise.

Sur une surface plane ou faiblement galbée, l'application de la force F/2 par l'intermédiaire du palonnier intermédiaire permet au palonnier secondaire 16a et à la lame souple 20 de retrouver leur forme initiale.

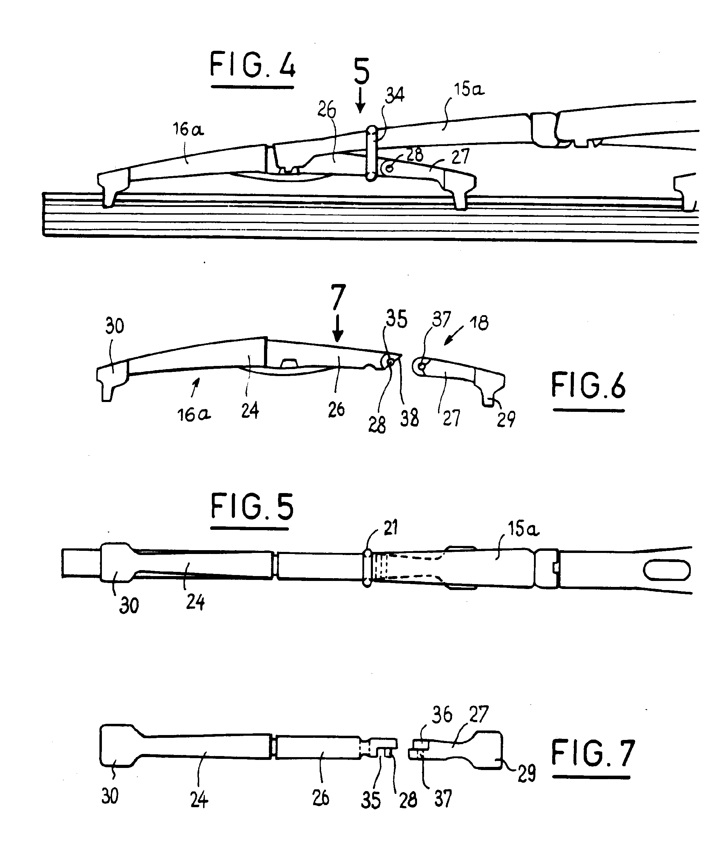

Sur les figures 4 et 5, on a représenté une variante de réalisation du balai d'essuie-glace représenté sur la figure 3.

Les éléments correspondants sur les figures 3 d'une part et 4 et 5 d'autre part portent les mêmes repères.

Le balai d'essuie-glace représenté sur les figures 4 et 5 est identique au balai représenté sur la figure 3, à l'exception du ressort 21 qui est remplacé par une bague en caoutchouc ou un élastique 34.

Le fonctionnement du dispositif représenté sur les figures 4 et 5 est identique au fonctionnement du dispositif de la figure 3.

Sur les figures 6 et 7, on a représenté un palonnier 16a pouvant constituer le palonnier secondaire extérieur d'un balai d'essuie-glace tel que représenté sur les figures 3, 4 et 5. Le palonnier 16a est constitué de deux pièces assemblables qui ont été représentées sur les figures 6 et 7, dans un état non assemblé.

Une première pièce du palonnier 16a est constitué par la branche 24 du palonnier et le tronçon 26 de la branche 18 permettant la fixation articulée du palonnier secondaire 16a à l'extrémité d'une branche d'un palonnier intermédiaire tel que 15a représenté sur les figures 3, 4 et 5.

Une seconde pièce du palonnier 16a est constituée par le tronçon 27 de la branche 18 portant à son extrémité la pince 29.

La partie d'extrémité du tronçon 26 est usinée pour constituer un embrèvement en forme de portion de cercle 35 et l'axe d'articulation 28.

La partie d'extrémité correspondante du tronçon 27 assemblable au tronçon 26 est usinée pour constituer un embrèvement comportant une surface d'appui 36 et une ouverture 37. La partie d'extrémité du tronçon 26 comporte une surface d'appui 38, de manière que lors de l'assemblage des tronçons 26 et 27, par engagement de l'axe 28 dans l'ouverture 37, la surface d'appui 38 vienne en vis-à-vis de la surface d'appui 36.

De cette manière, l'application d'une force dirigée vers la surface de la vitre par le palonnier intermédiaire 15a (figures 3 et 4) ayant pour origine la force F/2 transmise par le palonnier principal produit, par interaction des surfaces d'appui 38 et 36, une limitation du débattement de l'articulation 19 dans la direction opposée à la surface de la vitre, dans le cas où l'extrémité extérieure de la raclette parvient dans une zone de la vitre qui est plane ou faiblement galbée. Le palonnier 16a et l'extrémité de la lame souple 20 peuvent ainsi retrouver une forme correspondant à une position des tronçons 26 et 27 sensiblement dans le prolongement l'un de l'autre.

Le balai d'essuie-glace suivant l'invention assure donc un parfait contact de la lame souple de la raclette avec la vitre, aussi bien dans le cas où la raclette est au repos et comporte une partie, par exemple sa partie externe, en vis-à-vis d'une zone fortement galbée de la vitre que dans le cas où la raclette est en fonctionnement et réalise le balayage de la surface d'une vitre comportant des zones fortement galbées et des zones faiblement galbées ou planes.

Ces résultats sont obtenus sans modifier la hauteur de la raclette et le nombre de pinces de fixation de la lame souple. L'utilisation de la raclette ou balai d'essuie-glace suivant l'invention ne nécessite pas d'augmentation de la puissance du moteur d'entraînement de l'essuie-glace ni de modification du système d'entraînement des balais.

L'efficacité du balayage reste toujours satisfaisante et l'invention peut être appliquée à tout type de balais d'essuie-glace, suivant les conceptions actuelles.

La fabrication des balais d'essuie-glace suivant l'invention ne nécessite pas de modification essentielle des outillages ou procédés utilisés pour la fabrication des balais d'essuie-glace suivant l'art antérieur.

De même, le balai d'essuie-glace suivant l'invention peut être monté en remplacement d'un balai d'essuie-glace suivant l'art antérieur, sans aucune modification du porte-raclette et de l'attache de ce porte-raclette.

Le balai d'essuie-glace suivant l'invention peut donc être vendu par les services après-vente comme pièce détachée destinée à remplacer un balai d'essuie-glace classique.

L'invention ne se limite pas au mode de réalisation qui a été décrit.

C'est ainsi que plusieurs palonniers secondaires d'un balai d'essuie-glace suivant l'invention peuvent comporter une branche réalisée de manière articulée, comme il vient d'être décrit pour le palonnier secondaire situé à l'extrémité extérieure du balai.

Le balai d'essuie-glace suivant l'invention peut également comporter un palonnier intermédiaire dont une des branches est réalisée sous forme articulée, de la manière qui vient d'être décrite. Dans ce cas, la branche articulée du palonnier intermédiaire se trouve à l'aplomb de la branche du palonnier principal à laquelle est suspendu le palonnier intermédiaire et le rappel élastique en direction du palonnier principal du tronçon de la branche articulée solidaire de la branche rigide du palonnier intermédiaire est assuré par un dispositif élastique.

De manière plus générale, l'invention s'applique dans tous les cas où un balai d'essuie-glace comporte au moins un palonnier porteur tel que le palonnier principal ou des palonniers intermédiaires et des palonniers portés tels que des palonniers intermédiaires ou des palonniers secondaires, les palonniers portés étant fixés de manière articulée sur les palonniers porteurs.

Le balai d'essuie-glace suivant l'invention peut comporter une ou plusieurs articulations supplémentaires sur un ou plusieurs palonniers, en fonction de la forme du galbe de la vitre auquel il est associé.

L'invention s'applique à tout essuie-glace d'un véhicule tel qu'un véhicule automobile.

## Revendications

1. Balai d'essuie-glace comportant une lame souple d'essuyage (20) et un ensemble de support de la lame (20) comprenant un palonnier principal (12) muni de moyens de raccordement à un porte-raclette (13) et ayant deux branches (12a, 12b) portant chacune de manière articulée, un palonnier intermédiaire (15a, 15b), chaque palonnier intermédiaire (15a, 15b) porté par le palonnier principal porteur (12) portant lui-même de manière articulée un palonnier secondaire (16a, 17a, 16b, 17b) sur chacune de ses branches et la lame souple (20) étant portée par les palonniers secondaires (16a, 17a, 16b, 17b) caractérisé par le fait que l'un au moins des palonniers constitué par un palonnier porté secondaire ou intermédiaire (16a) comporte une branche (18) constituée de deux tronçons (26, 27) reliés entre eux par une articulation supplémentaire (19), située à l'aplomb d'une branche du palonnier porteur constitué par un des palonniers intermédiaires ou par le palonnier principal (15a) correspondant sur laquelle est articulé le palonnier porté (16a), l'un des tronçons (26) sur lequel est placé le moyen de fixation (25) du palonnier porté (16a) sur le palonnier porteur (15a) étant rappelé par un moyen élastique (21, 34) en direction de la branche du palonnier porteur (15a) sur laquelle est fixé le palonnier porté (16a).

2. Balai d'essuie-glace suivant la revendication 1, caractérisé par le fait que le palonnier porté (16a) est un palonnier secondaire et le palonnier porteur (15a) un palonnier intermédiaire.

3. Balai d'essuie-glace suivant la revendication 2, caractérisé par le fait que le palonnier secondaire (16a) est situé à l'extrémité extérieure du balai d'essuie-glace (11) dans une zone du balai d'essuie-glace susceptible de venir en vis-à-vis d'une partie fortement galbée de la vitre dont on réalise l'essuyage.

4. Balai d'essuie-glace suivant la revendication 3, caractérisé par le fait que la branche articulée (18) du palonnier secondaire (16a) est située vers l'intérieur du balai d'essuie-glace, par rapport à la branche (24) non articulée du palonnier (16a).

5. Balai d'essuie-glace suivant l'une quelconque des revendications 1 à 4, caractérisé par le fait que le moyen élastique de rappel du tronçon (26) de la branche articulée (18) du palonnier (16a) est constitué par un ressort (21) en forme d'épingle engagé sur les branches en vis-à-vis du palonnier porteur (15a) et du palonnier porté (16a), de manière à assurer le rappel du tronçon (26) de la branche articulée (18) du palonnier porté (16a) relié au palonnier porteur (15a), en direction de la branche du palonnier porteur (15a) sur laquelle est fixé de manière articulée le palonnier porté (16a).

6. Balai d'essuie-glace suivant l'une quelconque des revendications 1 à 4, caractérisé par le fait que le moyen élastique de rappel du tronçon (26) de la branche articulée (18) du palonnier porteur (16a) fixé de manière articulée sur le palonnier porteur (15a) est constitué par une bague élastique (34) entourant le tronçon (26) de la branche articulée (18) du palonnier porté (16a) et la branche du palonnier porteur (15a) située en vis-à-vis sur laquelle est fixé de manière articulée le palonnier porté (16a).

7. Balai d'essuie-glace suivant l'une quelconque des revendications 1 à 6, caractérisé par le fait que les tronçons (26 et 27) de la branche (18) du palonnier porté (16a) comportent deux parties d'extrémité assurant leur raccordement bout à bout de manière articulée constituant un axe d'articulation (28) pour l'un des tronçons (26) et une ouverture (37) d'engagement de l'axe (28) pour l'autre tronçon (27) ainsi que deux surfaces d'appui (38, 36) en vis-à-vis permettant de limiter le débattement de l'articulation (19) dans le sens inverse de la surface de la vitre à laquelle est associé l'essuie-glace, par action d'une force d'appui (F/2) par l'intermédiaire du palonnier porteur (15a), lorsque le balai d'essuie-glace se trouve dans une zone de la vitre de forme plane ou faiblement galbée.

**Patentansprüche**

1. Scheibenwischer mit einem elastischen Wischblatt (20) und einer Stützeinheit für das Blatt (20) mit einer Hauptstange (12), die mit einer Einrichtung zum Verbinden mit einem Wischerhalter (13) versehen ist und zwei Arme (12a, 12b) aufweist, die jeweils gelenkig eine Zwischenstange (15a, 15b) tragen, wobei jede von der Haupttragestange (12) getragene Zwischenstange (15a, 15b) ihrerseits an jedem ihrer Arme gelenkig eine sekundäre Stange (16a, 17a, 16b, 17b) trägt und das elastische Blatt (20) von den sekundären Stangen (16a, 17a, 16b, 17b) getragen ist, dadurch gekennzeichnet, daß wenigstens eine der durch eine getragene sekundäre Stange oder Zwischenstange (16a) gebildeten Stangen einen Arm (18) aufweist, der aus zwei Abschnitten (26, 27) besteht, die über ein zusätzliches Gelenk (19) miteinander verbunden sind, und der senkrecht zu einem Arm der von einer der Zwischenstangen oder der Hauptstange (15a) gebildeten entsprechenden tragenden Stange angeordnet ist, an der die getragene Stange (16a) angelenkt ist, wobei einer der Abschnitte (26), an dem die Einrichtung (25) zur Befestigung der getragenen Stange (16a) an der tragenden Stange (15a) angeordnet ist durch eine elastische Einrichtung (21, 34) in Richtung des Armes der tragenden Stange (15a) vorgespannt ist, an der die getragene Stange (16a) befestigt ist.

2. Scheibenwischer nach Anspruch 1, dadurch gekennzeichnet, daß die getragene Stange (16a) eine sekundäre Stange und die tragende Stange (15a) eine Zwischenstange ist.

3. Scheibenwischer nach Anspruch 2, dadurch gekennzeichnet, daß die sekundäre Stange (16a) am äußeren Ende des Scheibenwischers (11) in einem Bereich des Scheibenwischers angeordnet ist, der einem stark gewölbten Teil der zu reinigenden Scheibe gegenüberliegt.

4. Scheibenwischer nach Anspruch 3, dadurch gekennzeichnet, daß der gelenkige Arm (18) der sekundären Stange (16a) in bezug zum nicht gelenkigen Arm (24) der Stange (16a) einwärts des Scheibenwischers angeordnet ist.

5. Scheibenwischer nach einem der Ansprüche 1-4, dadurch gekennzeichnet, daß die elastische Vorspanneinrichtung des Abschnitts (26) des gelenkigen Arms (18) der Stange (16a) durch eine Feder (21) in Form einer Nadel gebildet ist, die der tragenden Stange (15a) und der getragenen Stange (16a) gegenüberliegend derart in Eingriff mit den Armen vorgesehen ist, daß sie die Vorspannung des Abschnitts (26) des gelenkigen Arms (18) der mit der tragenden Stange (15a) verbundenen getragenen Stange (16a) in Richtung des Armes der tragenden Stange (15a), an der die getragene Stange (16a) gelenkig befestigt ist, gewährleistet.

6. Scheibenwischer nach einem der Ansprüche 1-4, dadurch gekennzeichnet, daß die elastische Vorspanneinrichtung des Abschnitts (26) des gelenkigen Arms (18) der gelenkig an der tragenden Stange (15a) befestigten getragenen Stange (16a) aus einem elastischen Ring (34) besteht, der den Abschnitt (26) des gelenkigen Arms (18) der getragenen Stange (16a) und den gegenüberliegenden Arm der tragenden Stange (15a) umgibt, an dem die getragene Stange (16a) angelenkt ist.

7. Scheibenwischer nach einem der Ansprüche 1-6, dadurch gekennzeichnet, daß die Abschnitte (26 und 27) des Arms (18) der getragenen Stange (16a) zwei Endbereiche, die die gelenkige Verbindung ihrer Enden miteinander gewährleisten, welche an dem einen der Abschnitte (26) eine Gelenkachse (28) und an dem anderen Abschnitt (27) eine Eingriffsöffnung (37) für die Achse (28) bilden, sowie zwei einander gegenüberliegende Anlageflächen (38, 36) aufweisen, welche die Auslenkung des Gelenks (19) in zu der Oberfläche der Scheibe, der der Scheibenwischer zugeordnet ist, entgegengesetzter Richtung durch die Wirkung einer über die tragende Stange (15a) wirkenden Auflagedruckkraft (F/2) begrenzt, wenn sich der Scheibenwischer in einem ebenen oder gering gewölbten Bereich der Scheibe befindet.

**Claims**

1. Windscreen wiper blade comprising a supple wiping strip (20) and an assembly for supporting the strip (20) comprising a main rocking arm (12) fitted with means for connection to a wiper holder (13) and having two branches (12a, 12b) each bearing in articulated manner, an intermediate rocking arm (15a, 15b), each intermediate rocking arm (15a, 15b) borne by the main bearer rocking arm (12) itself bearing in articulated manner a secondary rocking arm (16a, 17a, 16b, 17b) on each of its branches and the supple strip (20) being borne by the secondary rocking arms (16a, 17a, 16b, 17b) characterised in that at least one of the rocking arms constituted by a borne secondary or intermediate rocking arm (16a) comprises one branch (18) consisting of two sections (26, 27) connected to one another by an additional articulation (19), situated directly underneath one branch of the bearer rocking arm constituted by one of the intermediate rocking arms or by the corresponding main rocking arm (15a) on which is articulated the borne rocking arm (16a), one of the sections (26) on which is placed the means (25) for securing the borne rocking arm (16a) onto the bearer rocking arm (15a) being returned by a resilient means (21, 34) in the direction of the branch of the bearer rocking arm (15a) onto which is secured the borne rocking arm (16a).

2. Windscreen wiper blade according to Claim 1, characterised in that the borne rocking arm (16a) is a secondary rocking arm and the bearer rocking arm (15a) an intermediate rocking arm.

3. Windscreen wiper blade according to Claim 2, characterised in that the secondary rocking arm (16a) is situated at the outer end of the windscreen wiper blade (11) in a zone of the windscreen wiper blade liable to come face-to-face with a sharply curved part of the window the wiping of which is being performed.

4. Windscreen wiper blade according to Claim 3, characterised in that the articulated branch (18) of the secondary rocking arm (16a) is situated towards the interior of the windscreen wiper blade, with respect to the non-articulated branch (24) of the rocking arm (16a).

5. Windscreen wiper blade according to any of Claims 1 to 4, characterised in that the resilient return means of the section (26) of the articulated branch (18) of the rocking arm (16a) is constituted by a pin-shaped spring (21) engaged on the branches facing one another of the bearer rocking arm (15a) and of the borne rocking arm (16a), so as to ensure the return of the section (26) of the articulated branch (18) of the borne rocking arm (16a) connected to the bearer rocking arm (15a), in the direction of the branch of the bearer rocking arm (15a) on which is secured in articulated manner the borne rocking arm (16a).

6. Windscreen wiper blade according to any of Claims 1 to 4, characterised in that the resilient return means of the section (26) of the articulated branch (18) of the bearer rocking arm (16a) secured in articulated manner on the bearer rocking arm (15a) is constituted by a resilient ring (34) surrounding the section (26) of the articulated branch (18) of the borne rocking arm (16a) and the branch of the bearer rocking arm (15a) situated opposite onto which is secured in articulated manner the borne rocking arm (16a).

7. Windscreen wiper blade according to any of Claims 1 to 6, characterised in that the sections (26 and 27) of the branch (18) of the borne rocking arm (16a) comprise two end parts ensuring their end-to-end connection in articulated manner constituting a hinge pin (28) for one of the sections (26) and an aperture (37) for engagement of the pin (28) for the other section (27) as also two bearing surfaces (38, 36) face-to-face serving to limit the deflection of the articulation (19) in the opposite direction to the surface of the window with which the windscreen wiper is associated, by action of a bearing force (F/2) through the intermediary of the bearer rocking arm (15a), when the windscreen wiper blade is situated in a zone of the window of flat or slightly curved shape.

**FIG.1**

**FIG.2**

**FIG.3**

**FIG.3A**

## FIG.4

## FIG.6

## FIG.5

## FIG.7